# EUROPEAN PATENT APPLICATION

(11) **EP 3 189 923 A1**
(43) Date of publication of application: **12.07.2017**
(21) Application number: 15837452.0
(22) Date of filing: 01.09.2015
(51) Int. Cl.: B23K 9/06, H05H 1/26

(54) **CIRCUIT FOR CONTROLLING AND IDENTIFYING A PLASMA TORCH**

(30) Priority: 03.09.2014 BR 102014021846
(71) Applicant: Powermig Automação E Soldagem Ltda, CEP: 95032-471 Caxias do Sul - RS (BR)
(72) Inventor: FOCHESATTO, Juarez, CEP: 95032-140 Caxias do Sul - RS (BR)
(74) Representative: Pereira Garcia, João Luís
(86) International application number: PCT/BR2015/000136
(87) International publication number: WO 2016/033664

(57) **Abstract**

A circuit for the control and identification of a plasma torch comprising an electronic circuit plate (100) provided with a microcontroller located next to the plasma cut torch (200), controlling and identifying the plasma torch (200) next to the central plate (30) of the device (300) by means of two wires (10) known as "network" which perform the communication between the circuit (100) and the power supply of the device (300) promoting monitoring and control of all the actions of the device, eliminating the need of various wires, solving the problems of frequent stops of the device due to breaking wires and eliminating difficulties to read the power of the plasma torch (200).

## Description

### Field of the Invention

The present invention discloses a circuit for the control and identification of a plasma torch. More specifically, it comprises an electronic circuit for monitoring and controlling all the actions of the equipment, eliminating the need of various wires, solving the problems of frequent stops of the device due to breaking wires and difficulties in reading the power of the plasma torch.

### Background of the Invention

Currently, the cutting system by plasma arch consists of a power supply, a starting circuit for the arc and a torch. These constituents of the system provide electric energy, ionization capacity and the control of the process as required to produce high quality cuts and high productivity with various different materials.

However, the state of the art presents plasma cutting torches provided with various command wires, being two wires intended to activate the guiding arc circuit for the torch by the trigger, by manual or mechanized firing. Said wires enable the guiding arc to open the arch to enable the cutting torch to start the cutting stage and transfer power from the supply to the cutting base metal.

Other two wires for monitoring the safety of the presence of the torch mouth, which object is to concentrate the flow of gas and air, serving as a support to the cutting peak, diffuser and electrode. If the mouth is not present and with the presence wires of the mouth being active, both wires usually send a signal to the device, so to inform it of the lack of mouth.

Other two wires for identifying the torch model identify the model by pinning the torch and then inform and limit the power of the device.

Therefore, the wires coming from the plasma torch promoting the activation of the guiding arc, the safety of the mouth system and the identification of the power of the torch are currently linked and managed by the equipment usually located at a distance of up to 10 meters from the plasma torch, frequently breaking the wires and disturbing the reading and management of the torch by the equipment.

Such equipment, besides having various command wires, have a maximum energy source transmission capability of 80 A, thus restricting its use, besides causing various stops due to wire breaking by equipment overload.

Therefore, it is the object of the present invention to present an electronic circuit for monitoring and control of all actions of the device, eliminating the need of various cables, since the electronic circuit allows to centralize the activating information for the pilot arc of the torch, control the presence of the torch mouth and identification of the torch model, managing communications by the network concept between the cutting supply and the torch by using just two connection wires with the device, allowing to use the torch with power between 20 A and 400 A for conducting the power supply. Therefore, it assures the equipment to have a longer working life and avoids excessive stops during the operation.

### Brief Description of Drawings

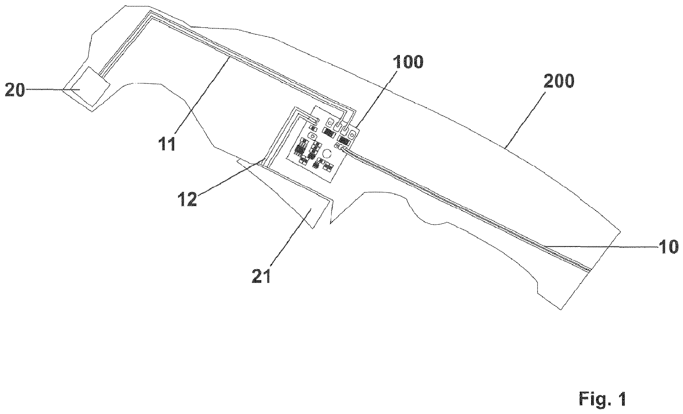

Figure 1 shows a cut view of the plasma torch, detailing the control and identification circuit.

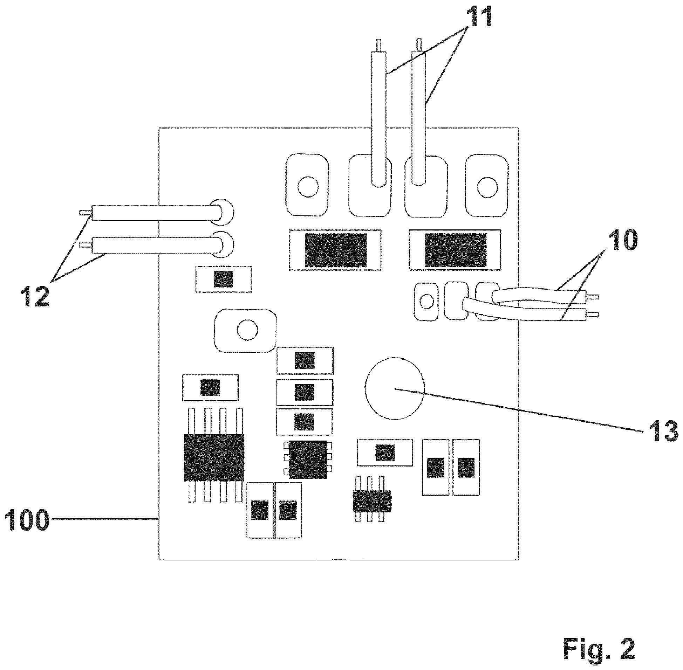

Figure 2 shows the representation of the electronic circuit, detailing control and identification wires.

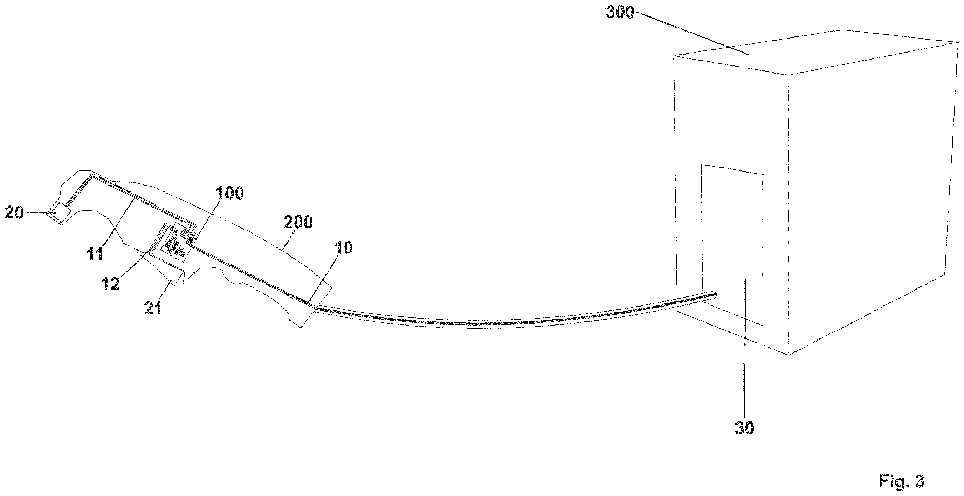

Figure 3 shows a view of the plasma torch linking to the power supply of the device.

### Detailed Description of the Invention

The circuit for control and identification of a plasma torch object of the present invention discloses an electronic circuit plate (100) provided by a microcontroller located next to the plasma cut torch (200), controlling and identifying the plasma torch (200) next to the central plate (30) of the equipment (300) by means of two wires (10) known as "network" performing communication between the circuit (100) and the power supply of the device (300).

The electronic circuit plate (100) is provided with a microcontroller promoting the safety control for the mouth (20) of the torch by means of two interlinked wires (11) between the plate (100) and the mouth of the torch (20), said wires (11) also promoting power control of the torch next to the plate (100). Furthermore, the circuit plate (100) performs the control of activation of the trigger (21) of the torch by means of two interlinked wires (12) between the plate (100) and the trigger of the plasma torch (21).

The information coming from the wires (11 and 12) for activating the trigger (21), the safety of the mouth (20) and the control of power of the mouth are processed by the microcontroller located next to the electronic plate (100) promoting data processing and sending it to the central plate (30) of the equipment (300) by means of two wires (10) known as "network", performing communication between the electronic plate circuit (100) and the power supply (30) located next to the device (300).

The electronic circuit plate (100) allows to control the power of the torch, read the presence of a mouth (20) and control the activation signal for the trigger (21) in an integrated form, promoting the control and identification of information and sending necessary commands to the device (300).

The control and identification circuit for the plasma torch, object of the present invention, starts operation by activating the trigger of the torch (20) sending signals through the wires (12) next to the circuit plate (100), promoting reading of the safety control of the mouth (20) and reading the power of the torch by the interlinked wires (11) next to the plate (100), thus allowing to identify if the safety wires (11) of the mouth (20) are correctly interlinked and to identify the required power for the operation of the torch (200).

The electronic plate (100) sends to the power supply (30) of the equipment (300) the identification of the torch being used and, on the other hand, the source (30), with that identification, releases the power according to the capacity of the plasma torch (200).

The information identified by the electronic plate (100) is sent by two wires (10) known as "network", performing communication between the electronic plate circuit (100) and the power supply (30) as located next to the device (300).

The central plate (30) of the device (300) receives the information from the electronic plate (100) provided with a microcontroller, by activating the constituents of the device as required, and retransmitting by the two wires (10) via "network" the commands to the plasma torch (200).

The electronic plate (100) provided with a microcontroller presents a LED lightening point (14) sending to the operator a colored visual signal, according to pre-determined colors next to the microcontroller, informing possible damage to the system or identifying when the system is ready to start operation.

Optionally, the electronic plate (100) provided with a microcontroller may be installed next to the main connector of the torch (200) on its back side, and may also be used as an interface located between the torch (200) and the cutting device (300).

Therefore, an object of the present invention is an electronic circuit (100) for monitoring and controlling all the actions of the device, eliminating the requirement of various cables, since the electronic circuit (100) allows to centralize the information for activating the guiding arc of the torch (21) through the wires (12), control of the presence of the mouth (20) and the identification of the model and power of the torch through the wires (11), managing communication by means of the concept of network between the cutting supply (30) of the device (300) and the torch (200) by using just two linking wires (10) with the device (300), allowing the use of the torch (200) under a power between 20 A and 400 A for the conduction of the energy supply, thus solving the problem of constant stops of the device due to breaking wires and difficult reading of the power of the plasma torch.

## Claims

1. CIRCUIT FOR CONTROL AND IDENTIFICATION OF A PLASMA TORCH, **characterized by** disclosing an electronic circuit plate (100) provided with a microcontroller promoting safety control of the mouth (20) of the torch (200) and the control of the power of the torch (200) next to the plate (100) through two wires (11), said plate (100) presenting two wires (12) promoting the control and identification of the activation of the trigger (21); said wires (11) and (12), interlinked between the mouth (20) and the trigger (21) next to the electronic plate (100), promote data processing, transmitting to the central plate (30) of the device (300), through two wires (10) known as "network" performing the communication between the electronic plate circuit (100) and the power supply (30) located next to the device (300); said electronic plate (100) sends to the power supply (30) of the device (300) the identification of the torch being used and, on the other hand, the source (30), with that identification, releases the power according to the capacity of the plasma torch (200).

2. CIRCUIT FOR CONTROL AND IDENTIFICATION OF A PLASMA TORCH of claim 1, **characterized by** the electronic plate (100) provided with a microcontroller presenting a LED lightening point (14) sending to the operator a visual signal, informing possible damage to the system or identifying when the system is ready to start operation.

3. CIRCUIT FOR CONTROL AND IDENTIFICATION OF A PLASMA TORCH of claim 1, **characterized by** the electronic plate (100) being optionally able to be installed next to the main connector of the torch (200) on its back side, and may also be used as an interface, provided between the torch (200) and the device (300).
